# EUROPEAN PATENT SPECIFICATION

(11) **EP 1 781 798 B1**
(45) Date of publication and mention of the grant of the patent: **02.06.2010**
(21) Application number: 04763902.6
(22) Date of filing: 06.08.2004
(51) Int. Cl.: C12P 7/62, C08K 5/00, C08L 67/04

(54) **USE OF FATTY ALCOHOLS AS PLASTICIZER TO IMPROVE THE PHYSICAL-MECHANICAL PROPERTIES AND PROCESSABILITY OF PHB AND ITS CO-POLYMERS**
VERWENDUNG VON FETTALKOHOLEN ALS WEICHMACHER ZUR VERBESSERUNG DER PHYSIKALISCH-MECHANISCHEN EIGENSCHAFTEN UND VERARBEITBARKEIT VON PHB UND SEINEN COPOLYMEREN
UTILISATION D'ALCOOLS GRAS EN TANT QUE PLASTIFIANT AFIN D'AMELIORER LES PROPRIETES PHYSIQUES-MECANIQUES ET LA TRANSFORMABILITE DU POLY-3-HYDROXYBUTIRATE (PHB) ET DE SES COPOLYMERES

(43) Date of publication of application: 09.05.2007
(73) Proprietor: PHB Industrial S.A., 14150-000 Serrana - SP (BR)
(72) Inventor: BUENO DE ALMEIDA, Wanderson, CEP-12216-590 Sao José dos Campos-SP (BR); SILVA BIZZARRI, Pablo, CEP-12319-640 Jacarei, SP (BR); SERTORI DURAO, Antônio, Centro, Brodowski, SP (BR); DO NASCIMENTI, Jefter, Fernandes, Sao Paulo, SP (BR)
(74) Representative: Geyer, Fehners & Partner
(86) International application number: PCT/EP2004/008874
(87) International publication number: WO 2006/012917

(56) References cited:
- WO-A-94/28047
- WO-A-94/28061
- WO-A-02/085983
- US-A- 6 127 512
- EL-HADI, AHMED ET AL: "Effect of melt processing on crystallization behavior and rheology of poly(3-hydroxybutyrate) ( PHB ) and its blends" MACROMOLECULAR MATERIALS AND ENGINEERING , 287(5), 363-372 CODEN: MMENFA; ISSN: 1438-7492, 2002, XP002323380

## Description

### Brief description of the invention

Fatty alcohols with glycerol fatty esters are used as plasticizers in PHB and its co-polymer compositions to improve the processability and physical-mechanical properties. The plasticizers are incorporated in the PHB and its co-polymers by mixing in a dry blend system.

### State of the art

At worldwide industrial today is known the need to produce biodegradable and biocompatible materials employing renewable raw materials and energy source, through not environment aggressive process.

At market, the more successfully biodegradable biopolymer applications are disposable materials like for agrochemical and cosmetics packaging, and medicinal applications.

An important biodegradable biopolymer family is the Polyhydroxyalcanoates (PHAs). They are polyesters made by many microorganisms natural synthesis. There are more than 170 microorganisms on the literature, and the commercial advantage of the PHAs is not only linked to the biodegradable qualities, but also to the thermo-mechanical properties and low production costs.

The most representatives PHAs are: the PHB (poly-3-hydroxybutyrate), PHB-V (poly(hydroxybutyrate-co-hydroxyvalerate)), P4HB (poly-4-hydroxybutyrate), P3HB4HB (poly(3-hydroxybutyrate-co-4-hydroxybutyrate)) and any PHAmcl (middle chain polyhydroxyalcanoates), and the PHHx (polyhydroxyhexanoate) are a typical biopolymer these last family. The PHAs Chemical structure can be described as a polymeric chain made for unit repetition below:

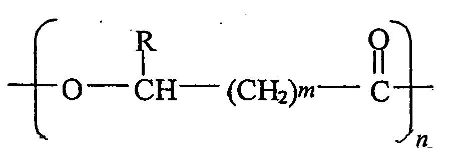

Where R is a variable length chain alkyl group. M and n are integral numbers, in the polymers mentioned above, R and M have the following values:
PHB: R=CH3, m=1
PHB-V: R=CH3 or CH3-CH2-, m=1
P4HB: R=H, m=2
P3HB-4HB: R=H or CH3, m=1 or 2
PHHx: R=CH3-CH2-CH2-, m=1

A lot of the PHAs can be processed on extruders, common injection molding without too big modifiers for a good processability. Also, there is a possibility to process these polymers in cast and coating film system for application like food industrial packs.

Depending on the development level these polymers can be used to make packs for personal hygiene of high-speed discharge and low thickness. Even where intrinsically the biodegradable properties were required, the PHAs has technical and commercial basements application aspects very clear, like compostage packs, golf tops, fishing articles and other things directly at the plastics materials handle in open field.

At agro business, PHAs can be applied in flowerpot, reforesting little tubes, plantation coating films and principally, in controlling liberation system for nutrients, herbicides, insecticides and others.

For biomedical applications, PHAs can be used in microencapsulating for compounds controlling liberation, medical sutures and osseous fracture fixation pins.

The great development of the natural science in the last two decades, especially of the biotechnology, have permitted the use of the many microorganisms, natural or genetically modified, in the commercial production of PHAs.

Although many application have being made with the bacterial cells "in natura" (without the PHAs solvent agent), like moldable materials, as explain the patent US-3107172, the PHAs commercial application, in the most cases required high purity level for a good plastic properties. It's crucial the utilization of solvents for the PHA extraction and recuperation of the residual biomass for an adequate processability purity level.

In patent EPA-01455233 A2 are described some procedures possibilities for the digestion of a cells with PHA aqueous suspension, using enzymes or surfactants agents for non-PHA substance solubilization. This patent shows, with reference to the solvent extraction process, possible limitations because of the elevated production costs. However, if desire an elevated purity product, the solvent step isn't eliminated.

At organic solvent extraction process, frequently cited on the literature for PHA extraction and recuperation of bacterial biomass, utilize partially halogenated hydrocarbons solvents, like chloroform (patent US-3275610), the ethanol/methanol chlorine (US-3044942), chloroethane and chloropropane with the boiling point between 65 to 170°C, 1,2-dichloroetane and 1,2,3-trichloropropane (patents EP-0014490 B1 and EP 2446859).

Other resources, also halogenated, like dichloromethane, dichloroethane and dichloropropane are cited at American patents US-4.562.245 (1985), US-4.310.684 (1982), US-4.705.604. (1987) and European patent 036.699 (1981) and German 239.609 (1986).

The biopolymer extraction and purification process of biomass, employing halogenated solvents are absolutely prohibitive today. They are extremely aggressive for the human health and the environment. Therefore, a solvent for PHA extraction and purification must be in the first place, environment friendly.

Therefore, the use of resources damaging for the environment in any production step must be voided. Also the energy source used in production process must come of renewable source. Where senseless have a low environmental impact plastic; if in your product only non-renewable resources were utilized, for example. A very interesting approach for this problem is the all incorporation of the bioplastic productive chain for agro industry, particularly for sugar and alcohol industry (Nonato, R.V., Mantelatto, P.E.,Rossell, C.E.V.,"Integrated Production of Biodegradable Plastic (PHB), Sugar and Ethanol", Appl. Microbiol. Biotechnology. 57:1-5, 2001).

The US Patent 6,127,512 discloses a polyester pellet composition comprising a polyhydroxyalkanoate (PHA) having a molecular weight (Mw) of greater than about 470,000 and a plasticizing quantity of at least one plasticizer selected from the group consisting of:
■ A. high boiling point esters selected from
   ○ phthalates and isophthalates of the formula: [Figure 1] where R1 is C1-20 alkyl cycloalkyl or benzyl; (ii) citrates of the formula: [Figure 2] where R1 is hydrogen or C1-10 alkyl, and R2 is C1-10 alkyl, C1-10 alkoxy or C1-10 alkoxyalkyl;
   ○ adipates of the formula R1 --O--C(O)--(CH2)4 --C(O)--OR2 where R1 and R2 which may be the same or different are C2-12 alkyl or C2-12 alkoxyalkyl;
   ○ sebacates of the formula R1 --C(O)--(CH2)8 --C(O)--O--R1 where R1 is C2-15 alkyl or C2-15 alkoxyalkyl;
   ○ azelates of the formula R1 --O--C(O)--(CH2)7 --C(O)--R1 where R1 is C2-12 alkyl, benzyl, or C2-12 alkoxyalkyl; 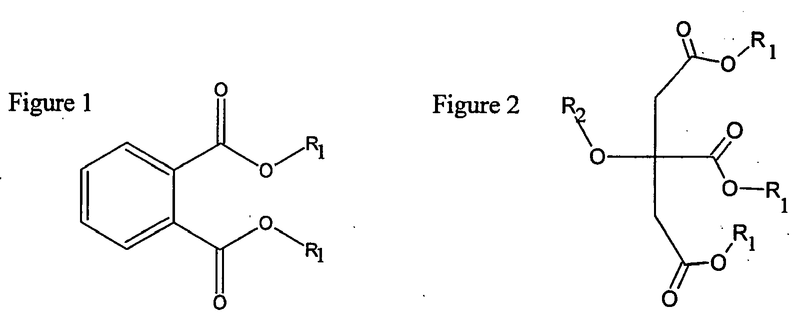
■ B. alkyl ethers/esters of the formula R2 --(O)--CH2 --CH2)n --O--R1 where R1 is alkyl or --C(O)--alkyl, R2 is alkyl and n is 2 to 100; or where R1 is hydrogen and either: R2 is alkylphenyl where the alkyl is C2-12 alkyl, and n is 1 to 100; or R2 is CH3 --(CH2)10 --C(O)-- and n is 5, 10, or R2 is CH3 --(CH2)7 CH=CH--(CH2)7 --C(O)-- and n is 5 or 15;
■ C. epoxy derivatives of the formula CH3 --(CH2)n --A--(CH2)n --R in which the A is an alkene containing one or more double bonds (i.e. unsaturated fatty acids), n is 1 to 25 and R is C2-15 alky; or epoxy derivatives of triglycerides containing one or more double bonds per fatty acid chain with chain lengths from C6-26.
■ D. substituted fatty acids selected from the group consisting of sorbitan monolaurate, sorbitan monooleate, poly(oxyethylene)(20) Sorbitan monolaurate, poly(oxyethylene)(4)lauryl ether, and butyl acetyl ricinoleate; and
■ E. polymeric esters of the formula --O--C(O)--R1 --C(O)--O--R2 --O-- in which R1 and R2 are both independently C2-12 alkylene, or R2 may be derived from a diol.

WO 02/085983 A1 discloses a polyhydroxyalkanoate copolymer composition that can be processed into extruded and molded articles and film-based products, containing a combination of nucleant and plasticizer for enhancing crystallization rates.

In El-Hadi, Ahmed et al, "Effect of melt processing on crystallization behavior and rheology of poly(3-hydroxybutyrate) (PHB) and its blends", Macromolecular Materials and Engineering, 287(5), 363-372, the use of glycerol tristearate as an additive to PHBs is disclosed.

### Description of the invention

Its is an object of the present invention to provide plasticizer compositions for PHB and its co-polymers, to improve the physical/ mechanical properties of the processed PHB and its co-polymers. PHB is defined as a Poly hydroxy butyrate resin, a biodegradable polymer. According to the invention this is achieved by a plasticizer composition comprising
(i) PHB with the proviso that the PHB and its co-polymers of PHB are produced by a bio-polymer extraction process, characterized by the fact that the concentrated cellular material, previously dried or not, is mixed to an adequate solvent, specifically superior alcohol, preferably with a chain with more than 3 carbon atoms, or any other of its acetates, preferably the isoamyl alcohol, amyl acetate, isoamyl acetate or the fusel oil as described by the Brazilian Patent PI 9302312-0 published in 04/30/2002,
(ii) a) Fatty alcohols of chain length from 6 to 30 carbon (C6-C30) with the proviso that the fatty alcohols can be saturated or olefinically unsaturated linear or branched and b) glycerol esters of fatty acids with 6 to 24 carbon atoms with the proviso that the fatty acids can be saturated or olefinically unsaturated, linear or branched.

Dry blend compositions of PHB and its co-polymer with fatty alcohols and glycerol esters used as plasticizer, are easily prepared by mixing the PHB and its co-polymers in a dry blend mixer at 90°C for 5 minutes with slowly addition of the plasticizers under mixing.

In one embodiment the plasticizer compositions of the invention contain compounds (i) and (ii) in an amount that the weight ratio of compounds (i) and (ii) is within the range 95:5 and 50:50 and specially within the range 90:10 and 75:25.

The invention also relates to the use of compositions comprising the plasticizers (ii) with the proviso that they are composed by:
a) - Fatty alcohols of chain length from 6 to 30 carbon (C6-C30) saturated or olefinically unsaturated, linear or branched
b) - Glycerol esters of fatty acids with 6 to 24 carbon atoms with the proviso that the fatty acids can be saturated or olefinically unsaturated, linear or branched

As also stated above the compositions preferably contain compounds (a) and (b) in an amount that the weight ratio of compounds (a) and (b) is within the range 95:5 or 75:25 and 50:50. Those plasticizer compositions, which exclusively contain compounds (a) and (b) are preferred.

The PHB and its co-polymers provided for this invention have Mw from 300.000 to 1.000.000 with the general formula: 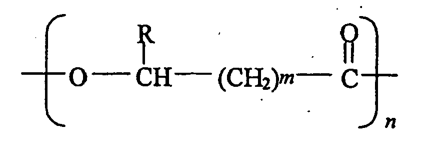 where R is an alkyl group of variable length m and n are integral numbers, for PHB and its co-polymers R and m have the following values:
PHB: R=CH₃, m=1
PHB-V: R=CH₃ or CH₃-CH₂-, m=1
P4HB: R=H, m=2
P3HB-4HB: R=H or CH₃, m=1 or 2
PHHx: R=CH₃-CH₂-CH₂-, m=1.

The preferably polymer used in accordance with this invention is the pure PHB with molecular weight of 400.000 to 800.000.

The PHB and its co-polymers, according to this invention, comes from a process (Brazilian Patent PI 9302312-0) which utilize a solvent extraction process without the use of halogenated solvents.

The extraction process utilizes superior alcohols with chain length superior to 3 carbons atoms or the acetates derivatives. Preferably the isoamyl alcohol (3-methyl-1-butanol), the amyl acetate and fusel oil or a mix of superior alcohols as by product from alcoholic fermentation process where the mainly component is the isoamyl alcohol.

The process can be performed in a continuous or intermittent way and, in both cases, the cells containing the bio-polymer are processes by a single solvent, what characterizes a single stage process.

In this process, the concentrated cellular material, previously dried or not, is submitted to extraction with an adequate solvent, superior alcohol and/or its ester. After that, the cellular residue is separated by conventional mechanical techniques that can be deposition, flotation, filtering, centrifuging or also a combination of these methods, resulting in a cake and a solution containing the polymer. The latter is submitted to a crystallization stage that turns the polymer not soluble in the solvent without the presence of an agent that prevents dissolution. The crystallization may occur due to the increased concentration of the polymer in the solution, by removing the solvent (for example, evaporation), associated or not to the saturation of the solution due to the lowering of the mean's temperature. In both cases, the polymer will solidify in the solution without the addition of a dissolving prevention agent and, then, it may be recovered from the solution by conventional mechanical separation (as mentioned above). Therefore, the separated solution may be directly recycled to the extraction stage.

The drying and extraction of the polymer can be done in a single stage if an adequate solvent is chosen, which is not or partially not soluble in water, as, for example the isoamyl alcohol; water can be removed by distilling the mixture in its boiling point during the extraction. The distilled material can then be cooled forming two phases. The aqueous phase is discarded and the solvent returns directly to the extraction process.

In order to operate according to the system above, appropriate pressure and temperature conditions must be chosen in order to prevent the thermal decomposition of the polymer.

In order to increase the grain size and make crystallization easier, the material may be sowed with selected grain that act as crystallization germs.

The temperature range that is more adequate for the polymer extraction is usually above 40°C and the solvent boiling point (in the case of dry cells), or at the aqueous mixture boiling point (in the case of humid cells).

Once the hot dissolving is performed, the product precipitation occurs due to the cooling of the solution until the ambient temperature. This cooling may eventually be preceded by an impurity purging.

The heating, cooling and purging operations are performed in the same vessel, or in two vessels placed in series, featuring devices to control and act upon the system's temperature. The vessels can also count with a stirring system to accelerate the extraction and system of flow-directing plates to enhance deposition. Alternatively, the cell suspension in the solvent may be heated in continuous flow through heat exchangers and, after that, transferred to a cooling and deposition vessel.

The quantity of solvent employed depends on the bio-polymer content in the cells and on the extraction time. The ratio between the solvent mass and the mass of the cells vary between 2.5 and 200, preferably between 10 and 150.

Its is also an object of this invention to provide the use of thermal stabilization system, constituted by: primary antioxidant such as hindered Phenol (in content of 0,02% and 0,5% in mass concerning at the totality, included the PHB and the plasticizers); secondary antioxidant such as organic phosphites (in content of 0,02% and 0,5% in mass concerning at the totality, included the PHB and the plasticizer); thermal stabilize such as lactone (in content of 0,02% and 0,5% in mass concerning at the totality, included the PHB and the plasticizer).

It's also another object of this invention to provide the use of the sorbitol and sodium benzoate as nucleants. This nucleants are used for the thermodynamic and kinetic process controls of the PHB crystallization (nucleating and growth) at polymeric compositions. In accordance with crystalline morphology and with crystallinity degree desired the nucleant content must be changed, of combined form with the cooling gradient imposed to the polymeric material during its final stage process.

The invention also relates the use of fillers in the plasticizers composition with the proviso that the fillers can be compose by starch, wood powder, cane bagasse fibers, rice pod fibers and sisal fibers. These fillers are used to concern specific process-structure-properties-cost relationship, desired for a specific product made with a polymeric composition based in PHB/plasticizer/additives.

Another embodiment of the invention is the use of the claimed composition as injection molding pieces and/or as films for packaging.

### Examples

A technical study was made with pure PHB and 3 different plasticizer composition. Dry blend mixtures of PHB and the plasticizer composition were produced by mixing them in a Mixer at 100°C to 110°C for 5 minutes and 5 minutes of cooling to 50°C. The dry blend was pelletized by extrusion and the body tests were produced by injection molding as follow:

### Extrusion:

-Co-Rotacional double screw extruder- Wemer & Pfleiderer ZSK-30 (30 mm) -Conditions:

| Samples | Temperature (°C) | | | | | | | Speed (rpm) |
|---|---|---|---|---|---|---|---|---|
| Zones | C1 | C2 | C3 | C4 | C5 | Matrix | Melt | |
| PHB Pure | 128 | 132 | 154 | 140 | 150 | 152 | 152 | 140 |
| PHB / Plasticizer (80/20) | 130 | 137 | 138 | 140 | 148 | 148 | 154 | 150 |
| PHB / Plasticizer | 130 | 135 | 135 | 140 | 145 | 145 | 152 | 150 |
| PHB / Plasticizer (60/40) | 120 | 135 | 135 | 140 | 145. | 145 | 150 | 150 |

### Injection Moulding:

■ Injection Machine-ARBURG 270 V - 30 ton
■ Mold (for body tests), ASTM D 638 (tensile Strength I) and ASTM D 256 (Impact Izod).

### Injection Moulding conditions:

| **Temperature profile (°C):** | **Pressure/time profiles** |
|---|---|
| Zone 1: 152 | Pressure (bar): 400 |
| Zone 2: 156 | Pressurization (bar): 380 |
| Zone 3: 172 | Flow (cm³/ s): 20 |
| Zone 4: 172 | Holding (bar): 300 |
| Zone 5: 170 | Time of holding (s): 12 |
| Mold (°C): 35 | Back pressure (bar): 40 |
| Cooling time (s): 32 | Dosage Speed (mm / min): 12 |

| **Samples** | **Density (g/cm3)** | **Melt Flow (g/10min)** | **Tensile strength (MPa)** | **% Elongation** | **Tensile Modulus (MPa)** | **Izod Impact (Notched)** | **% cristalinity (DSC)** | **TM (DSC)** |
|---|---|---|---|---|---|---|---|---|
| **PHB (MW-380.000)** | 1,228 | 33,5 | 36,68 | 2,23 | 3,24 | 21,09 | 61,4 | 173,9 |
| **F2080** | 1,137 | 57,2 | 19,64 | 2,68 | 1,72 | 18,65 | 56,1 | 170,5 |
| **F3080** | 1,088 | 95,6 | 15,25 | 3,77 | 1,13 | 21,09 | 55,3 | 166,7 |
| **F4080** | 1,074 | 133,7 | 12,93 | 3,58 | 0,98 | 23,85 | 58,5 | 165,6 |

### Tests results:

| **Plasticizer compositions** | **Oleyl alcohol** | **Glycerol ester of Soy Bean Oil** | **PHB** |
|---|---|---|---|
| F2080 | 8% | 2% | 90% |
| F3080 | 16% | 4% | 80% |
| F4080 | 24% | 6% | 70% |

## Claims

1. A plasticized polymeric composition comprising
(i) PHB and its co-polymers, which have a molecular weight of 300.000 to 1.000.000 with the general formula: 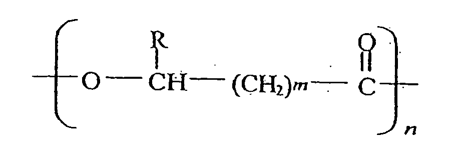 wherein R is an alkyl group of variable length, m and n are integral numbers, for PHB and its co-polymers R and m have the following values:
PHB: R=CH₃, m=1
PHB-V: R=CH₃ or CH₃-CH₂-, m=1
P4HB: R=H, m=2
P3HB-4HB: R=H or CH₃, m= 1 or 2
PHHx : R=CH₃-CH₂-CH₂-, m=1
(ii) a) fatty alcohols of chain length from 6 to 30 carbon atoms (C6-C30) with the proviso that the fatty alcohols can be saturated or olefinically unsaturated, linear or branched and b) glycerol esters of fatty acids with 6 to 24 carbon atoms with the proviso that the fatty acids can be saturated or olefinically unsaturated, linear or branched.

2. The composition according to claim 1 further comprising
(iii) additives, **characterized in that that** the additives are composed by thermal stabilization system, constituted by primary antioxidant such as hindered Phenol; secondary antioxidant such as organic phosphites; thermal stabilizers such as lactone; sorbitol and sodium benzoate as nucleants; and starch, wood powder, cane bagasse fibers, rice pod fibers and sisal fibers as fillers.

3. The compositions according to claim 1 or 2, **characterized in that** the weight ratio of compounds (i) and (ii) is within the range of 90:10 and 75:25.

4. Use of the composition according to any of claims 1 to 3 as injection molding pieces and/or as films for packaging.

## Patentansprüche

1. Weichgemachte polymere Zusammensetzung, umfassend
(i) PHB und dessen Copolymere mit einem Molekulargewicht von 300.000 bis 1.000.000 mit der allgemeinen Formel: 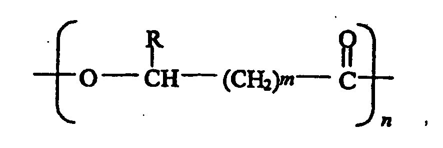 worin R eine Alkylgruppe variabler Länge ist, m und n ganze Zahlen sind, wobei R und m für PHB und dessen Copolymere folgende Werte aufweisen:
PHB: R=CH₃, m=1
PHB-V: R=CH₃ oder CH₃-CH₂-, m=1
P4HB: R=H, m=2
P3HB-4HB: R=H oder CH₃, m= 1 oder 2
PHHx : R=CH₃-CH₂-CH₂-, m=1
(ii) a) Fettalkohole mit einer Kettenlänge von 6 bis 30 Kohlenstoffatomen (C6-C30) mit der Maßgabe, daß die Fettalkohole gesättigt oder olefinisch ungesättigt, geradkettig oder verzweigt sein können und b) Glycerolester von Fettsäuren mit 6 bis 24 Kohlenstoffatomen mit der Maßgabe, daß die Fettsäuren gesättigt oder olefinisch ungesättigt, geradkettig oder verzweigt sein können.

2. Zusammensetzung nach Anspruch 1, ferner umfassend
(iii) Additive, **dadurch gekennzeichnet, daß** die Additive durch ein thermisches Stabilisierungssystem gebildet sind, aufgebaut aus primären Antioxidantien wie zum Beispiel gehindertem Phenol; sekundärer Antioxidantien wie zum Beispiel organischen Phosphiten; thermischen Stabilisierungsmitteln wie zum Beispiel Lacton; Sorbitol und Natriumbenzoat als Keimbildner; und Stärke, Holzpulver, Zuckerrohrbagassen-Fasern, Reisschalenfasern und Sisalfasern als Füllstoffen.

3. Zusammensetzung nach Anspruch 1 oder 2, **dadurch gekennzeichnet, daß** das Gewichtsverhältnis der Verbindungen (i) und (ii) im Bereich von 90:10 und 75:25 liegt.

4. Verwendung der Zusammensetzung nach einem der Ansprüche 1 bis 3 als Spritzgußstücke und/oder als Verpackungsfolien.

## Revendications

1. Composition polymère plastifiée, comprenant :
(i) du PHB et ses copolymères, ayant un poids moléculaire de 300 000 à 1 000 000, de formule générale : 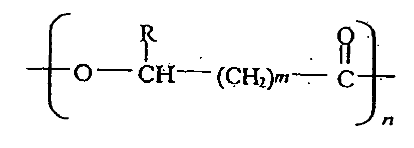 dans laquelle R représente un groupe alkyle de longueur variable, m et n représentent des nombres entiers ; pour le PHB et ses copolymères, R et m ont les valeurs suivantes :
PHB = R = CH₃ , m = 1
PHB-V : R = CH₃ ou CH₃-CH₂-, m = 1
P4HB : R = H, m = 2,
P3HB-4HB : R = H ou CH₃, m = 1 ou 2
PHHx : R = CH₃-CH₂-CH₂-, m = 1
(ii) a)des alcools gras ayant une longueur de chaîne de 6 à 30 atomes de carbone (C₆ à C₃₀), sous réserve que les alcools gras puissent être saturés ou à insaturation oléfinique, linéaires ou ramifiés et b) des esters de glycérol d'acides gras ayant 6 à 24 atomes de carbone, sous réserve que les acides gras puissent être saturés ou à insaturation oléfinique, linéaires ou ramifiés.

2. Composition suivant la revendication 1, comprenant en outre
(iii) des additifs, **caractérisée en ce que** les additifs sont constitués d'un système de stabilisation thermique, constitué d'un antioxydant primaire tel qu'un phénol à encombrement stérique ; d'un antioxydant secondaire tel que des phosphites organiques ; de stabilisants thermiques tels qu'une lactone ; de sorbitol et benzoate de sodium servant d'agents de nucléation ; et d'amidon, de poudre de bois, de fibres de bagasse de canne, de fibres d'enveloppes de riz et de fibres de sisal comme charges.

3. Compositions suivant la revendication 1 ou 2, **caractérisées en ce que** le rapport pondéral des composés (i) et (ii) est compris dans l'intervalle de 90:10 à 75:25.

4. Utilisation de la composition suivant l'une quelconque des revendications 1 à 3 comme pièces de moulage par injection et/ou comme films pour l'emballage.
